# EUROPÄISCHE PATENTSCHRIFT

(11) **EP 4 565 815 B1**
(45) Veröffentlichungstag und Bekanntmachung des Hinweises auf die Patenterteilung: **03.06.2026**
(21) Anmeldenummer: 23738691.7
(22) Anmeldetag: 04.07.2023
(51) Int. Cl.: F17C 13/04

(54) **VERFAHREN ZUM BETREIBEN UND/ODER BETANKEN EINES DRUCKGASVERSORGUNGSSYSTEMS UND ELEKTRONISCHE VORRICHTUNG**
METHOD FOR OPERATING AND/OR REFILLING A PRESSURISED GAS SUPPLY SYSTEM AND ELECTRONIC DEVICE
PROCÉDÉ DE FONCTIONNEMENT ET/OU DE REMPLISSAGE D'UN SYSTÈME D'ALIMENTATION EN GAZ SOUS PRESSION ET DISPOSITIF ÉLECTRONIQUE

(30) Priorität: 03.08.2022 DE 102022208066
(43) Veröffentlichungstag der Anmeldung: 11.06.2025
(73) Patentinhaber: Robert Bosch GmbH, 70442 Stuttgart (DE)
(72) Erfinder: KATZ, Martin, 70469 Stuttgart (DE); WESSNER, Jochen, 73728 Esslingen (DE); BREITBACH, Thomas, 71554 Weissach Im Tal (DE)
(86) Internationale Anmeldenummer: PCT/EP2023/068371
(87) Internationale Veröffentlichungsnummer: WO 2024/028019

(56) Entgegenhaltungen:
- DE-A1- 102016 218 691
- DE-A1- 102017 213 526
- DE-A1- 102019 211 422
- US-A1- 2010 320 224

## Beschreibung

Die Erfindung betrifft ein Verfahren zum Betreiben und/oder Betanken eines Druckgasversorgungssystems mit mindestens zwei Druckgastanks, die an einen Anodenpfad eines Brennstoffzellensystems angebunden sind. Die Erfindung betrifft darüber hinaus ein Steuergerät für ein Fahrzeug.

### Stand der Technik

Aus der deutschen Offenlegungsschrift DE 10 2020 206 230 A1 ist ein Verfahren zum initialen Konditionieren einer Brennstoffzelle eines Brennstoffzellenaggregats für ein Brennstoffzellenfahrzeug bekannt, wobei die Brennstoffzelle mittels eines Steuergeräts des Brennstoffzellenaggregats ansteuerbar ist, wobei die Brennstoffzelle mit Hilfe des Steuergeräts wenigstens teilweise oder vollständig initial konditioniert wird. Aus der deutschen Offenlegungsschrift DE 10 2020 212 077 A1 ist ein Verfahren zum Betreiben eines Brennstoffzellensystems bekannt, bei dem Wasserstoff einem Wasserstoffspeicher entnommen und über einen Anodenpfad einer Anode eines Brennstoffzellenstapels zugeführt wird und bei dem der Massenstrom des Wasserstoffs durch ein im Anodenpfad angeordnetes Wasserstoffdosierventil vorgegeben wird, wobei der Druck unabhängig vom Massenstrom mit Hilfe eines ansteuerbaren Druckminderers, der stromaufwärts des Wasserstoffdosierventils im Anodenpfad angeordnet ist, variabel eingestellt wird, wobei der Druck in Abhängigkeit von mindestens einer aktuellen Bedingung, insbesondere in Abhängigkeit von der Umgebungstemperatur, dem Zeitpunkt des letzten Betankungsvorgangs, dem Füllstand im Wasserstoffspeicher, dem kalibrierten Druck nach dem Druckminderer, dem Druck in der Anode, dem Druck in einer Kathode und/oder dem geförderten Wasserstoffmassenstrom, eingestellt wird. Aus der deutschen Offenlegungsschrift DE 10 2020 210 300 A1 ist ein ähnliches Verfahren zum Betreiben eines Brennstoffzellensystems bekannt, wobei der dem Druckgasbehälter entnommene Wasserstoff mit Hilfe eines im Anodenpfad angeordneten Wärmeübertragers thermisch konditioniert wird.

Die DE 10 2019 211422 A1 zeigt ein Tanksystems zum Speichern und Bereitstellen von Brennstoff an einen Verbraucher, aufweisend: mehrere Tankflaschen mit jeweils einem Absperrventil zum Verschließen oder Öffnen der jeweiligen Tankflasche, mindestens ein Sicherheitsventil zum kontrollierten Ablassen des Brennstoffes in einem Notfall aus mindestens einer der mehreren Tankflaschen, einem Sensornetzwerk zum Überwachen der mehreren Tankflaschen, ein primäres Steuergerät zum Ansteuern der Absperrventile, und ein sekundäres Steuergerät zum Ansteuern des mindestens einen Sicherheitsventils und/oder der Absperrventile, wobei das sekundäre Steuergerät zum Ansteuern des Sensornetzwerks ausgeführt ist

Aus der DE 10 2017 213526 A1 ist ein Verfahren bekannt zum Betreiben und/oder Betanken eines Druckgasversorgungssystems mit mindestens zwei Druckgastanks, die an einen Anodenpfad eines Brennstoffzellensystems angebunden sind.

Die US 2010/320224 A1 offenbart ein System und Verfahren zum sicheren Ablassen von Hydraulikflüssigkeit aus einer Druckgasflasche .

In der DE 10 2016 218691 A1 ist ein Verfahren zum Freigeben einer Druckentlastung eines Druckbehälters eines Fahrzeugs mittels einer Druckentlastungsvorrichtung offenbart.

### Offenbarung der Erfindung

Aufgabe der Erfindung ist es, das Betreiben und/oder Betanken eines Druckgasversorgungssystems mit mindestens zwei Druckgastanks, die an einen Anodenpfad eines Brennstoffzellensystems angebunden sind, zu vereinfachen oder zu verbessern.

Die Aufgabe ist bei einem Verfahren zum Betreiben und/oder Betanken eines Druckgasversorgungssystems mit mindestens zwei Druckgastanks, die an einen Anodenpfad eines Brennstoffzellensystems angebunden sind, dadurch gelöst, dass den Drucktanks zugeordnete Ventilvorrichtungen, die für jeden der Druckgastanks einen Befüllpfad mit einem aktiv schaltbaren Befüllventil und einen Entlastungspfad mit einem aktiv schaltbaren Entlastungsventil umfassen, über ein Steuergerät, das sensormäßig mit einer Sensoreinrichtung verbunden ist, die mindestens einen Sensor umfasst, der eine aktuelle Temperatur in der jeweiligen Ventilvorrichtung erfasst, individuell angesteuert werden. Das Verfahren wird zum Beispiel in Brennstoffzellensystemen eingesetzt, die wasserstoffbasierte Brennstoffzellen umfassen, in denen Wasserstoff mit Hilfe von Sauerstoff in elektrische Energie gewandelt wird. Die so bereitgestellte elektrische Energie wird in einer mobilen Anwendung, zum Beispiel in einem Elektromotor eines Fahrzeugs, zum Antreiben verwendet. Das beanspruchte Verfahren kann aber auch in Verbrennungsmotorsystemen angewendet werden, in denen Wasserstoff zur Verbrennung verwendet wird. Mit den aktiv schaltbaren Ventilen kann jeder der Druckgastanks individuell befüllt und entleert werden. Das liefert enorme Vorteile zum einen bei einem Betanken der Druckgastanks in dem Druckgasversorgungssystem an einer entsprechenden Tankstelle, zum Beispiel einer Wasserstofftankstelle. Zum anderen kann das in den Druckgastanks enthaltene Druckgas, insbesondere Wasserstoff, im Betrieb des Druckgasversorgungssystems, aber auch im Stillstand eines mit dem Druckgasversorgungssystem ausgestatteten Kraftfahrzeugs, bedarfsabhängig zwischen den einzelnen Druckgastanks transportiert werden. So kann zum einen beim Betanken Zeit eingespart werden. Darüber hinaus können einzelne Druckgastanks gegebenenfalls mit mehr Druckgas befüllt werden als in herkömmlichen Druckgasversorgungssystemen. Des Weiteren können einzelne Druckgastanks bei Bedarf auch unter einem minimalen Grenzdruck betrieben werden, weil einzelne Druckgastanks bei Bedarf durch Schließen der aktiv schaltbaren Ventile schnell und einfach für eine gewisse Zeit von dem Druckgasversorgungssystem getrennt und zugeschaltet werden können. In den jeweils den einzelnen Druckgastanks zugeordneten Ventilvorrichtungen wird mit Hilfe der Sensoreinrichtung, die vorteilhaft mehrere Sensoren umfasst, nicht nur die Temperatur erfasst. Mit der Sensoreinrichtung werden vorteilhaft in der jeweiligen Ventilvorrichtung auch weitere fluidische Betriebsdaten erfasst, wie ein Druck an einer Verzweigung in der Ventilvorrichtung und/oder ein Massenstrom durch die jeweilige Ventilvorrichtung beim Befüllen oder Entleeren des Druckgastanks. Das Steuergerät ist mit einem geeigneten Softwareprodukt ausgestattet, um die Signale der Sensoren der Sensoreinrichtung zu verarbeiten und die Schaltventile, also das aktiv schaltbare Befüllventil und das aktiv schaltbare Entlastungsventil, entsprechend individuell anzusteuern.

Ein bevorzugtes Ausführungsbeispiel des Verfahrens ist dadurch gekennzeichnet, dass das Steuergerät mit einem Datensatzprodukt ausgestattet wird, das fluidische Referenzdaten und/oder Grenzdaten enthält, mit deren Hilfe die Ventilvorrichtungen in Abhängigkeit von den erfassten aktuellen Temperaturen in den Ventilvorrichtungen bei einem Betankungsvorgang und/oder im Betrieb des Druckgasversorgungssystems so angesteuert werden, dass ebenfalls erfasste Druckgastanktemperaturen in den Druckgastanks unter einer ersten Grenztemperatur gehalten werden. Die fluidischen Referenzdaten und/oder Grenzdaten umfassen mindestens eine Grenztemperatur, vorzugsweise mehrere unterschiedliche Grenztemperaturen, eine Temperaturkennlinie und/oder ein Temperaturkennfeld. Die Druckgastanktemperaturen werden in allen Druckgastanks mit geeigneten Sensoren erfasst. Über die Temperaturerfassung in den Ventilvorrichtungen kann vorteilhaft die Temperatur von Wasserstoff in den jeweiligen Befüllpfaden und Entlastungpfaden erfasst werden. So wird in Kombination mit den ebenfalls erfassten Druckgastanktemperaturen eine höchst effektive Temperatursteuerung beziehungsweise Temperaturregelung sowohl beim Betanken als auch im Betrieb des Druckgasversorgungssystems ermöglicht.

Ein weiteres bevorzugtes Ausführungsbeispiel des Verfahrens ist dadurch gekennzeichnet, dass das Steuergerät mit einem Datensatzprodukt ausgestattet wird, das fluidische Referenzdaten und/oder Grenzdaten enthält, mit deren Hilfe die Ventilvorrichtungen in Abhängigkeit von den erfassten aktuellen Temperaturen in den Ventilvorrichtungen bei einem Betankungsvorgang und/oder im Betrieb des Druckgasversorgungssystems so angesteuert werden, dass ein Anstieg einer individuellen Druckgastanktemperatur in einem der Druckgastanks über die Ansteuerung der jeweiligen Ventilvorrichtung begrenzt wird, sobald in dem betroffenen Druckgastank eine zweite Grenztemperatur erreicht wird. Für das Begrenzen der individuellen Druckgastanktemperatur über die Ansteuerung der jeweiligen Ventilvorrichtung kann auch der englische Begriff derating verwendet werden. Derating bedeutet unter anderem reduzieren, herabsteuern oder herabregeln. Durch die Verwendung der zwei Grenztemperaturen kann die Temperatursteuerung beziehungsweise Temperaturregelung im Betrieb und auch beim Betanken des Druckgasversorgungssystems weiter erhöht werden.

Ein weiteres bevorzugtes Ausführungsbeispiel des Verfahrens ist dadurch gekennzeichnet, dass der Befüllpfad eines Druckgastanks, dessen erfasste Druckgastanktemperatur unterhalb des ersten Grenzwertes liegt, über das Befüllventil in der jeweiligen Ventilvorrichtung freigegeben wird, um eine vorgegebene Sicherheitsanforderung zu erfüllen. Die Sicherheitsanforderung umfasst zum Beispiel das Erreichen eines gesetzlich vorgegebenen Sicherheitswertes im Betrieb des Druckgasversorgungssystems. Wenn der vorgegebene Sicherheitswert erreicht worden ist, dann wird der Befüllpfad des Druckgastanks wieder gesperrt.

Ein weiteres bevorzugtes Ausführungsbeispiel des Verfahrens ist dadurch gekennzeichnet, dass mindestens ein Entlastungspfad eines Druckgastanks über das Entlastungsventil in der jeweiligen Ventilvorrichtung freigegeben wird, um von außen in den jeweiligen Druckgastank eingebrachte Wärme gezielt aus dem Druckgastank abzuführen. Dadurch kann die Sicherheit im Betrieb und/oder beim Betanken des Druckgasversorgungssystems weiter erhöht werden. Sobald eine ausreichende Wärmemenge abgeführt ist, wird der Entlastungspfad des jeweiligen Druckgastanks wieder gesperrt.

Ein weiteres bevorzugtes Ausführungsbeispiel des Verfahrens ist dadurch gekennzeichnet, dass die Befüllpfade und/oder die Entlastungspfade der Ventilvorrichtungen über das Steuergerät gezielt angesteuert werden, um die Druckgastanktemperaturen in den Druckgastanks zeitlich zu regeln. Eine entsprechend optimierte Entnahmestrategie aus den einzelnen Druckgastanks ermöglicht auf einfache Art und Weise eine gewünschte Limitierung der Temperatur in den Druckgastanks. So können vorgegebene Sicherheitsanforderungen einfach erfüllt werden.

Ein weiteres bevorzugtes Ausführungsbeispiel des Verfahrens ist dadurch gekennzeichnet, dass die Druckgastanks über ein Rückschlagventil im Befüllpfad der zugeordneten Ventilvorrichtung nach einer Ansteuerung des Befüllventils kaskadiert betankt werden, wenn die Druckgastanks beim Betanken unterschiedliche Tankinnendrücke aufweisen. Eine Befüllung des betroffenen Druckgastanks erfolgt vorteilhaft erst dann, wenn der Tankinnendruck in dem Druckgastank beim Betanken überschritten wird. So kann die Effizienz beim Betanken effektiv gesteigert werden.

Ein weiteres bevorzugtes Ausführungsbeispiel des Verfahrens ist dadurch gekennzeichnet, dass Druckgastanks mit unterschiedlich großen Speichervolumina über die jeweils zugeordneten Befüllpfade nicht gleichzeitig sondern zeitlich versetzt betankt werden, wobei Befüllpfade von Druckgastanks mit einem größeren Speichervolumen zeitlich vor Befüllpfaden von Druckgastanks mit einem kleineren Speichervolumen über das Steuergerät freigegeben werden. Bei zwei unterschiedlich großen Druckgastanks wird zum Beispiel zuerst der größere Druckgastank befüllt. Bei mehreren größeren Druckgastanks werden diese vorteilhaft kaskadiert befüllt, bevor kleinere Druckgastanks befüllt werden. Wenn während eines Betankungsvorgangs eine Druckgastanktemperatur in einem Druckgastanks eine Grenztemperatur überschreitet, dann kann der Befüllvorgang des jeweiligen Druckgastanks einfach unterbrochen werden, während andere Druckgastanks einfach weiter befüllt werden.

Ein weiteres bevorzugtes Ausführungsbeispiel des Verfahrens ist dadurch gekennzeichnet, dass Druckgas zwischen den Druckgastanks über die zugeordneten Ventilvorrichtungen gezielt verschoben wird, um einen internen Ausgleich in dem Druckgasversorgungssystem durchzuführen. Die Ansteuerung erfolgt auch hier vorteilhaft über das Steuergerät. Durch das Verschieben des Druckgases zwischen den Druckgastanks wird eine intelligente Betriebsstrategie und/oder Betankungsstrategie über das Steuergerät ermöglicht, zum Beispiel mit Hilfe künstlicher Intelligenz. Vor Erreichen einer Grenztemperatur kann der Befüllvorgang eines betroffenen Druckgastanks zum Beispiel gezielt verlangsamt werden.

Die Erfindung betrifft ein Druckgasversorgungssystem mit mindestens zwei Druckgastanks, die an einen Anodenpfad eines Brennstoffzellensystems angebunden sind, wobei den Druckgastanks jeweils eine Ventilvorrichtung mit einem Befüllpfad, in welchem ein aktiv schaltbares Befüllventil angeordnet ist, und mit einem Entlastungspfad, in welchem ein aktiv schaltbares Entlastungsventil angeordnet ist, zugeordnet ist. Dabei werden die höheren Herstellkosten aufgrund der benötigten Pfade und aktiv schaltbaren Ventilen in den Ventilvorrichtungen bewusst in Kauf genommen.

Ein bevorzugtes Ausführungsbeispiel des Druckgasversorgungssystems ist dadurch gekennzeichnet, dass der Befüllpfad und der Entlastungspfad in der Ventilvorrichtung zwischen einem Tankinnenraum des jeweiligen Druckgastanks und einer Verzweigung fluidisch parallel geschaltet sind. Dadurch wird auf einfache Art und Weise ermöglicht, dass jeder der Druckgastanks über den Befüllpfad mit dem aktiv schaltbaren Befüllventil individuell befüllt werden kann. Über den Entlastungspfad mit dem schaltbaren Entlastungsventil kann jeder der Druckgastanks individuell entlastet werden. So kann das Druckgasversorgungssystem sowohl beim Betanken als auch in einem Betrieb unter extremen Umweltbedingungen, insbesondere Umwelttemperaturen, effektiver betrieben werden als herkömmliche Druckgasversorgungssysteme.

Ein weiteres bevorzugtes Ausführungsbeispiel des Druckgasversorgungssystems ist dadurch gekennzeichnet, dass das Befüllventil in dem Befüllpfad zwischen der Verzweigung und einem Rückschlagventil angeordnet ist, das in Richtung des Befüllventils sperrt, wobei in dem Entlastungspfad ein Rückschlagventil zwischen dem Entlastungsventil und der Verzweigung angeordnet ist, das in Richtung des Entlastungsventils sperrt. Dadurch werden Fehlfunktionen im Betrieb des Druckgasversorgungssystems vermieden.

Ein weiteres bevorzugtes Ausführungsbeispiel des Druckgasversorgungssystems ist dadurch gekennzeichnet, dass die Ventilvorrichtung mit dem Befüllpfad, dem Befüllventil, dem Entlastungspfad, dem Entlastungsventil und der Verzweigung in einen Ventilblock integriert sind, der an den jeweiligen Druckgastank angebaut ist. Der Ventilblock umfasst zusätzlich zu den genannten Komponenten weitere, zum Teil gesetzlich vorgeschriebene, Komponenten, wie Rückschlagventile, Filter, Sensoren und besonders vorteilhaft auch einen Druckbegrenzer. Der Ventilblock ist vorzugsweise an ein Ende des jeweiligen Druckgastanks angebaut. Aus herstelltechnischen Gründen wird der Ventilblock vorzugsweise unabhängig von dem Druckgastank hergestellt. Der Ventilblock ist zum Beispiel in eine Öffnung des Druckgastanks eingeschraubt. Zur Abdichtung zwischen dem Ventilblock und dem Druckgastank kann ein einfacher Dichtring, zum Beispiel ein O-Ring, verwendet werden. Durch die Integration der aktiv schaltbaren Ventile in dem Ventilblock wird auf einfache Art und Weise eine Kombination der beanspruchten Ventilvorrichtung mit herkömmlichen Druckgastanks ermöglicht.

Ein weiteres bevorzugtes Ausführungsbeispiel des Druckgasversorgungssystems ist dadurch gekennzeichnet, dass das Befüllventil und das Entlastungsventil als elektromagnetisch betätigbare 2/2-Wegeventile ausgeführt sind. Die 2/2-Wegeventile umfassen eine Schließstellung und eine Öffnungsstellung, in welcher der jeweilige Pfad freigegeben ist. Beide Ventile sind vorzugsweise in ihre jeweilige Schließstellung vorgespannt, in welcher ein Fluiddurchgang durch den jeweiligen Pfad unterbrochen ist. Durch elektromagnetische Ansteuerung können die Ventile geöffnet werden. Dadurch wird die Sicherheit im Betrieb des Druckgasversorgungssystems erhöht.

Ein weiteres bevorzugtes Ausführungsbeispiel des Druckgasversorgungssystems ist dadurch gekennzeichnet, dass das Befüllventil und das Entlastungsventil steuerungsmäßig mit einem Steuergerät verbunden sind, das sensormäßig mit einer Sensoreinrichtung verbunden ist, die mindestens einen Sensor umfasst, der fluidische Betriebsdaten, wie einen Druck, eine Temperatur und/oder einen Massenstrom an der Verzweigung, erfasst. Dadurch wird auf einfache Art und Weise eine komfortable Regelung der Temperatur eines Drucks und/oder eines Füllstands in dem jeweiligen Druckgastank ermöglicht. In dem Steuergerät ist vorteilhaft ein Datensatz hinterlegt, der entsprechende Referenzdaten und/oder Grenzdaten für den Druck, die Temperatur und/oder den Massenstrom enthält.

Bei einem Verfahren zum Betreiben eines vorab beschriebenen Druckgasversorgungssystems ist die oben angegebene Aufgabe alternativ oder zusätzlich dadurch gelöst, dass das Befüllventil und das Entlastungsventil mit dem Steuergerät in Abhängigkeit von den mit der Sensoreinrichtung erfassten fluidischen Betriebsdaten individuell angesteuert werden. So können die einzelnen Druckgastanks bei Bedarf individuell befüllt und entleert werden. Daraus ergeben sich zum einen beim Betanken der Druckgastanks des Druckgasversorgungssystems Vorteile. Darüber hinaus ergeben sich erhebliche Vorteile im Betrieb des Druckgasversorgungssystems.

Ein bevorzugtes Ausführungsbeispiel des Verfahrens ist dadurch gekennzeichnet, dass das Befüllventil und das Entlastungsventil mit dem Steuergerät individuell so angesteuert werden, dass die Druckgastanks uneinheitlich befüllt und/oder entleert werden. Das ist insbesondere dann von Vorteil, wenn das Druckgasversorgungssystem unterschiedlich große Druckgastanks und/oder auch Druckgastanks enthält, die im eingebauten Zustand unterschiedlichen Umgebungsbedingungen, insbesondere Umgebungstemperaturen, ausgesetzt sind. Das kann zum Beispiel darauf zurückgeführt sein, dass einzelne Druckgastanks weiter außen in oder an dem Kraftfahrzeug angeordnet sind, was dazu führen kann, dass sich diese Druckgastanks bei starker Sonneneinstrahlung schneller erwärmen als weiter im Inneren des Fahrzeugs angeordnete Druckgastanks.

Die Erfindung betrifft des Weiteren ein Steuergerät das dazu eingerichtet ist, ein vorab beschriebenes Verfahren auszuführen. Mit der elektronischen Vorrichtung können die Ventilvorrichtungen der einzelnen Druckgastanks individuell angesteuert werden. So wird eine komfortable Regelung des Füllstands, der Temperatur und/oder des Drucks in den einzelnen Druckgastanks des Druckgasversorgungssystems ermöglicht.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine schematische Darstellung eines Druckgasversorgungssystems mit insgesamt fünf Druckgastanks, die an einer Wasserstofftankstelle befüllt werden, wobei jeder der Druckgastanks mit einer Ventilvorrichtung ausgestattet ist, die einen Befüllpfad mit einem aktiv schaltbaren Befüllventil und einen Entlastungspfad mit einem aktiv schaltbaren Entlastungsventil umfasst; und
Figur 2 eine der Ventilvorrichtungen aus Figur 1 in Form eines Fluidschaltplans.

### Beschreibung der Ausführungsbeispiele

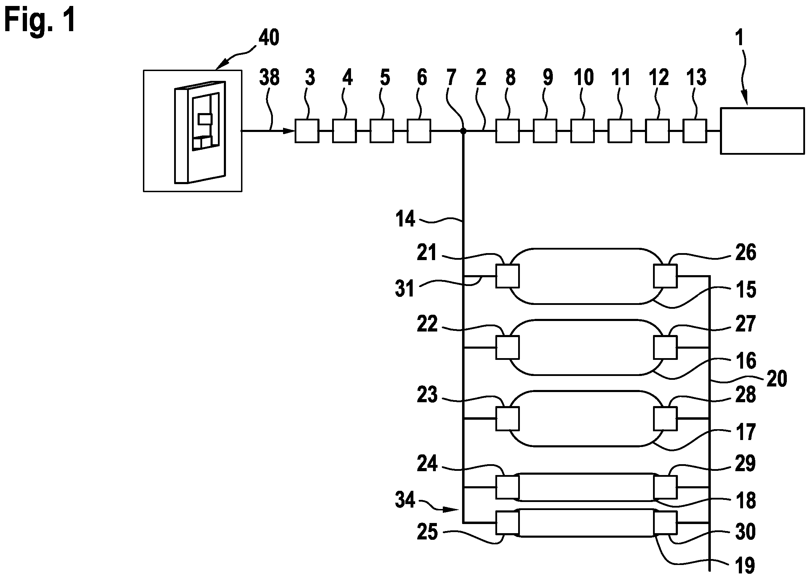

In Figur 1 ist eine Wasserstofftankstelle 40 schematisch angedeutet. Durch einen Pfeil 38 ist angedeutet, dass ein nicht näher dargestelltes Kraftfahrzeug mit einem Brennstoffzellensystem 1 an der Wasserstofftankstelle 40 mit Wasserstoff aufgetankt wird.

Das Brennstoffzellensystem 1 umfasst einen nicht näher bezeichneten Brennstoffzellenstapel mit Brennstoffzellen, die jeweils eine Anode umfassen, der über einen Anodenpfad 2 Wasserstoff zugeführt wird. Der Aufbau und die Funktion von derartigen Brennstoffzellensystemen sind bekannt.

In dem Anodenpfad 2 sind ein Rückschlagventil 3, ein Filter 4, ein Drucksensor 5, ein Temperatursensor 6, ein Temperatursensor 8, ein weiterer Drucksensor 9, ein weiterer Filter 10, ein Druckminderer 11, ein weiterer Filter 12 und ein Rückschlagventil 13 angeordnet. Zwischen dem Temperatursensor 6 und dem Temperatursensor 8 ist eine fluidische Verzweigung 7 vorgesehen. An der fluidischen Verzweigung 7 mündet eine Sammelleitung 14 in den Anodenpfad 2.

An die Sammelleitung 14 sind insgesamt fünf Druckgastanks 15, 16, 17, 18 und 19 eines Druckgasversorgungssystems 34 fluidisch angeschlossen. Die Druckgastanks 15 bis 19 sind zum Teil unterschiedlich groß ausgeführt. Die Druckgastanks 15 bis 17 sind etwa gleich groß, aber größer als die beiden Druckgastanks 18, 19 ausgeführt, die ebenfalls gleich groß ausgeführt sind.

Die Druckgastanks 15 bis 19 sind an ihren in Figur 1 linken Enden mit jeweils einer Ventilvorrichtung 21 bis 25 ausgestattet. An ihren in Figur 1 rechten Enden sind die Druckgastanks 15 bis 19 jeweils mit einer Ventilvorrichtung 26 bis 30 ausgestattet. Über die Ventilvorrichtungen 26 bis 30 sind die Druckgastanks 15 bis 19 an eine Sammelleitung 20 angeschlossen. Die Sammelleitung 20 dient zum Beispiel dazu, die Druckgastanks 15 bis 19 manuell zu entleeren. Dann sind die Ventilvorrichtungen 26 bis 30 als Tankablassventile ausgeführt.

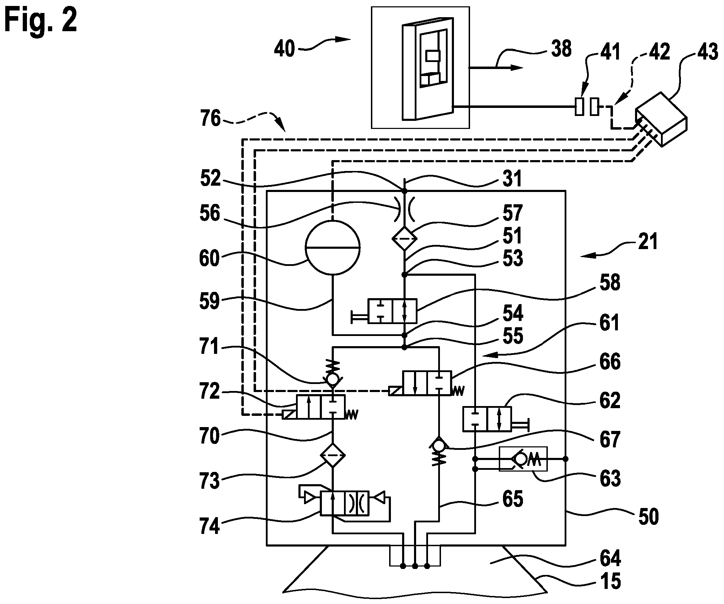

Die Ventilvorrichtungen 21 bis 25 sind alle gleich ausgeführt und werden im Folgenden unter Bezugnahme auf Figur 2 anhand der Ventilvorrichtung 21 am linken Ende des Druckgastanks 15 in Figur 1 ausführlich beschrieben. Die Ventilvorrichtung 21 ist über eine Anschlussleitung oder Verbindungsleitung 31 an die Sammelleitung 14 angeschlossen. Somit ist in Figur 2 ein mit 64 bezeichneter Tankinnenraum des Druckgastanks 15 über die Ventilvorrichtung 21 mit der Sammelleitung 14 und dem Anodenpfad 2 verbindbar.

Die Ventilvorrichtung 21 ist in einen Ventilblock 50 integriert, der, wie in Figur 2 angedeutet ist, an ein in Figur 2 oberes Ende des zum Beispiel als Gasflasche ausgeführten Druckgastanks 15 angebaut ist.

In Figur 2 oben ist die Wasserstofftankstelle 40 mit dem Tankpfad 38, der symbolisch durch einen Pfeil angedeutet ist, schematisch dargestellt. Die Wasserstofftankstelle 40 ist steuerungsmäßig über eine Infrarotschnittstelle 41 und eine Steuerleitung 42 mit einem Steuergerät 43 verbindbar. Das Steuergerät 43 ist in dem Brennstoffzellenfahrzeug, das mit dem in Figur 1 dargestellten Brennstoffzellensystem 1 ausgestattet ist, dem Druckgasversorgungssystem 34 und dem Brennstoffzellensystem 1 zugeordnet.

Die Wasserstofftankstelle 40 ist in Figur 2 oben angedeutet. In Figur 2 unten ist ein in Figur 2 oberes Ende des als Gasflasche ausgeführten Druckgastanks 15 angedeutet. Ein Tankinnenraum 64 des Druckgastanks 15 steht mit einem Entleerungspfad 61, einem Befüllpfad 65 und einem Entlastungspfad 70 in Verbindung. Die drei Pfade 61, 65 und 70 erstrecken sich durch den Ventilblock 50.

In Figur 2 oben ist an einer Anschlussstelle 52 die Anschlussleitung 31 an den Ventilblock 50 angeschlossen. Von der Anschlussstelle 52 erstreckt sich eine Verbindungsleitung 51 zu einer fluidischen Verzweigung 53 in dem Ventilblock 50. Die Verbindungsleitung 51 ist vorzugsweise als Verbindungskanal in dem Ventilblock 50 ausgeführt. Der Einfachheit halber werden alle fluidische Verbindungen im Folgenden als Leitungen bezeichnet. In dem Ventilblock 50 sind aber alle Leitungen vorzugsweise als Bohrungen ausgeführt.

In der Verbindungsleitung 51 ist ein optionaler hydraulischer Widerstand 56 in Form einer Drossel vorgesehen. Zwischen dem hydraulischen Widerstand 56 und der Verzweigung 53 ist ein Filter 57 angeordnet. Von der Verzweigung 53 geht der Entleerungspfad 61 aus, der in den Tankinnenraum 64 mündet. In dem Entleerungspfad 61 sind zwei Ventile 62 und 63 in Reihe geschaltet. Bei dem Ventil 62 handelt es sich um ein manuelles Entleerungsventil oder Ablassventil. Über das Ventil 62 kann der Druckgastank 15 bei Bedarf, beispielsweise bei einer Außerbetriebnahme an seinem Lebensende, manuell entleert werden.

Bei dem Ventil 63 handelt es sich um ein thermisch aktivierbares Druckentlastungsventil. Über das Ventil 63 kann der Tankinnenraum 64 entlastet werden. Zwischen der Verzweigung 53 und einer Verzweigung 54 ist ein manuell betätigbares Schließventil 58 angeordnet. Das manuell betätigbare Schließventil 58 dient dazu, den Druckgastank 15 sicher zu verschließen, beispielsweise während einer Reparatur.

Von der Verzweigung 54 geht eine Sensorleitung 59 aus, über die mit Hilfe einer Sensoreinrichtung 60 Betriebsdaten, wie Druck, Temperatur und/oder ein Fluidmassenstrom, im Betrieb des Druckversorgungssystems an der Verzweigung 54 in dem Ventilblock 50 erfasst werden. Die Verbindungsleitung 51, die von der Verzweigung 52 ausgeht, mündet in einer Verzweigung 55, von welcher der Befüllpfad 65 ausgeht und an welcher der Entlastungpfad 70 mündet.

In dem Befüllpfad 65 sind ein Befüllventil 66 und ein Rückschlagventil 67 in Reihe geschaltet. Das Rückschlagventil 67 öffnet in Richtung Tankinnenraum 64 und schließt in Richtung des Befüllventils 66. Der Befüllpfad 65 verläuft von der Verzweigung 55 parallel zu dem Entlastungspfad 70.

In dem Entlastungspfad 70 sind ein Rückschlagventil 71, ein Entlastungsventil 72, ein Filter 73 und ein Durchflussbegrenzer 74 in Reihe geschaltet. Das Rückschlagventil 71 sperrt in Richtung des Entlastungsventils 72 und öffnet in Richtung der Verzweigung 55. Der Durchflussbegrenzer 74 dient dazu, bei einem unerwünschten Leitungsbruch die Leckage zu begrenzen.

Das Befüllventil 66 und das Entlastungsventil 72 sind als 2/2-Wegeventile mit einer Öffnungsstellung und einer Schließstellung ausgeführt. Die beiden Ventile 66 und 72 werden elektromagnetisch betätigt und sind steuerungsmäßig mit dem Steuergerät 43 verbunden. Beide Ventile 66 und 72 sind, wie durch Federsymbole angedeutet ist, in ihre jeweilige Schließstellung vorgespannt. Die Sensoreinrichtung 60 ist sensormäßig oder steuerungsmäßig ebenfalls mit dem Steuergerät 43 verbunden. In Figur 2 sind Steuerleitungen beziehungsweise Signalleitungen oder Sensorleitungen 76 gestrichelt angedeutet.

Das Steuergerät 43 ist mit einer Software ausgestattet, mit welcher die im Betrieb des Druckgasversorgungssystems 34 mit der Sensoreinrichtung 60 erfassten Signale der Sensoren verarbeitet werden. Mit den Sensoren der Sensoreinrichtung 60 werden beispielsweise die Temperatur, der Druck, der Massenstrom, die Strömungsrichtung und gegebenenfalls weitere Messgrößen an der Verzweigung 54 In dem Ventilblock 50 erfasst.

Über das Steuergerät 43 werden die Druckgastanks 15 bis 19 individuell angesteuert, um die Druckgastanks 15 bis 19 uneinheitlich zu befüllen und/oder uneinheitlich zu entleeren. Zu diesem Zweck werden das Befüllventil 66 und das Entlastungsventil 72 über das Steuergerät 43 aktiv angesteuert. Auf diese Art und Weise können einzelne Druckgastanks 15 bis 19 unter einem zulässigen Betriebssystemgrenzdruck entleert werden, während mindestens einer der Druckgastanks 15 bis 19 mindestens mit dem zulässigen Betriebssystemgrenzdruck beaufschlagt bleibt. So kann in dem unter dem zulässigen Betriebssystemgrenzdruck entleerten Druckgastank eine definierte Menge Druckgas, insbesondere Wasserstoff, vorgehalten werden, der dann bei einem Systemstart zur Konditionierung des Brennstoffzellensystems 1 verwendet werden kann.

Die aktive Freigabe des Befüllpfads 65 mit Hilfe des Steuergeräts 43 über das Befüllventil 66 ermöglicht einen Betrieb des Druckgasversorgungssystems 34 mit dem Brennstoffzellensystem 1 auch bei unterschiedlichen Tankinnendrücken. Die Schaltventile 66 und 72 werden je nach Betriebsart eines mit dem Brennstoffzellensystem 1 und dem Druckgasversorgungssystem 34 ausgestatteten Fahrzeugs, zum Beispiel Fahrbetrieb, Parken, Tanken, individuell angesteuert.

Durch eine gezielte zeitliche Regelung oder Steuerung der Drücke und/oder der Temperaturen der einzelnen Druckgastanks 15 bis 19 wird vorteilhaft eine Druckabsenkung unter den systembedingten Grenzdruck ermöglicht. Diese Absenkung kann besonders vorteilhaft bei einem Systemstart erfolgen, wenn aus einem Druckgastank mit geringem Druck das System vorbefüllt wird, also mit Wasserstoff geflutet beziehungsweise für den Betrieb mit Wasserstoff konditioniert wird. Diese Konditionierung kann bis auf einen sehr geringen Restdruck erfolgen. Dadurch wird die Reichweite des Systems vergrößert.

Durch das beanspruchte Verfahren wird eine gezielte, zeitliche Regelung beziehungsweise Steuerung der Druckgastanktemperaturen mittels einer optimierten Entnahmestrategie aus den einzelnen Druckgastanks ermöglicht. So kann die Druckgastanktemperatur in den einzelnen Druckgastanks limitiert werden, um die Betriebssicherheit zu erhöhen. Über die aktiv schaltbaren Ventile kann auf einen Anstieg der Druckgastanktemperaturen rechtzeitig mittels derating reagiert werden.

Für den Fall, dass die Druckgastanks beim Betanken unterschiedliche Drücke aufweisen, sorgt das Rückschlagventil 67 in dem Befüllpfad 65 nach einem Schalten des Befüllventils 66 von selbst für eine kaskadierte Betankung. Der betroffene Druckgastank wird erst befüllt, wenn beim Betanken der aktuelle Druck in dem betroffenen Druckgastank überschritten wird.

## Patentansprüche

1. Verfahren zum Betreiben und/oder Betanken eines Druckgasversorgungssystems (34) mit mindestens zwei Druckgastanks (15,16,17,18,19), die an einen Verbrennungsmotor oder an einen Anodenpfad (2) eines Brennstoffzellensystems (1) angebunden sind,
**dadurch gekennzeichnet, dass** den Drucktanks (15,16,17,18,19) zugeordnete Ventilvorrichtungen (21,22,23,24,25), die für jeden der Druckgastanks (15,16,17,18,19) einen Befüllpfad (65) mit einem aktiv schaltbaren Befüllventil (66) und einen Entlastungspfad (70) mit einem aktiv schaltbaren Entlastungsventil (72) umfassen, über ein Steuergerät (43), das sensormäßig mit einer Sensoreinrichtung (60) verbunden ist, die mindestens einen Sensor umfasst, der eine aktuelle Temperatur in der jeweiligen Ventilvorrichtung (21,22,23,24,25) erfasst, individuell angesteuert werden.

2. Verfahren nach Anspruch 1, **dadurch gekennzeichnet, dass** das Steuergerät (43) mit einem Datensatzprodukt ausgestattet wird, das fluidische Referenzdaten und/oder Grenzdaten enthält, mit deren Hilfe die Ventilvorrichtungen (21,22,23,24,25) in Abhängigkeit von den erfassten aktuellen Temperaturen in den Ventilvorrichtungen (21,22,23,24,25) bei einem Betankungsvorgang und/oder im Betrieb des Druckgasversorgungssystems (34) so angesteuert werden, dass ebenfalls erfasste Druckgastanktemperaturen in den Druckgastanks (15,16,17,18,19) unter einer ersten Grenztemperatur gehalten werden.

3. Verfahren nach Anspruch 2, **dadurch gekennzeichnet, dass** das Steuergerät (43) mit einem Datensatzprodukt ausgestattet wird, das fluidische Referenzdaten und/oder Grenzdaten enthält, mit deren Hilfe die Ventilvorrichtungen (21,22,23,24,25) in Abhängigkeit von den erfassten aktuellen Temperaturen in den Ventilvorrichtungen (21,22,23,24,25) bei einem Betankungsvorgang und/oder im Betrieb des Druckgasversorgungssystems (34) so angesteuert werden, dass ein Anstieg einer individuellen Druckgastanktemperatur in einem der Druckgastanks (15,16,17,18,19) über die Ansteuerung der jeweiligen Ventilvorrichtung (21,22,23,24,25) begrenzt wird, sobald in dem betroffenen Druckgastank (15,16,17,18,19) eine zweite Grenztemperatur erreicht wird.

4. Verfahren nach Anspruch 2 oder 3, **dadurch gekennzeichnet, dass** der Befüllpfad (65) eines Druckgastanks (15,16,171,181,19), dessen erfasste Druckgastanktemperatur unterhalb des ersten Grenzwertes liegt, über das Befüllventil (66) in der jeweiligen Ventilvorrichtung (21,22,23,24,25) freigegeben wird, um eine vorgegebene Sicherheitsanforderung zu erfüllen.

5. Verfahren nach einem der Ansprüche 2 bis 4, **dadurch gekennzeichnet, dass** mindestens ein Entlastungspfad (70) eines Druckgastanks (15,16,17,18,19) über das Entlastungsventil (72) in der jeweiligen Ventilvorrichtung (21,22,23,24,25) freigegeben wird, um von außen in den jeweiligen Druckgastank (15,16,17,18,19) eingebrachte Wärme gezielt aus dem Druckgastank (15,16,17,18,19) abzuführen.

6. Verfahren nach einem der vorhergehenden Ansprüche, **dadurch gekennzeichnet, dass** die Befüllpfade (65) und/oder die Entlastungspfade (70) der Ventilvorrichtungen (21,22,23,24,25) über das Steuergerät (43) gezielt angesteuert werden, um die Druckgastanktemperaturen in den Druckgastanks (15,16,17,18,19) zeitlich zu regeln.

7. Verfahren nach einem der vorhergehenden Ansprüche, **dadurch gekennzeichnet, dass** die Druckgastanks (15,16,17,18,19) über ein Rückschlagventil (67) im Befüllpfad (65) der zugeordneten Ventilvorrichtung (21,22,23,24,25) nach einer Ansteuerung des Befüllventils (66) kaskadiert betankt werden, wenn die Druckgastanks (15,16,17,18,19) beim Betanken unterschiedliche Tankinnendrücke aufweisen.

8. Verfahren nach einem der vorhergehenden Ansprüche, **dadurch gekennzeichnet, dass** Druckgastanks (15,16,17,18,19) mit unterschiedlich großen Speichervolumina über die jeweils zugeordneten Befüllpfade (65) nicht gleichzeitig sondern zeitlich versetzt betankt werden, wobei Befüllpfade (65) von Druckgastanks (26,27,28) mit einem größeren Speichervolumen zeitlich vor Befüllpfaden (65) von Druckgastanks (29,30) mit einem kleineren Speichervolumen über das Steuergerät (43) freigegeben werden.

9. Verfahren nach einem der vorhergehenden Ansprüche, **dadurch gekennzeichnet, dass** Druckgas zwischen den Druckgastanks (15,16,17,18,19) über die zugeordneten Ventilvorrichtungen (21,22,23,24,25) gezielt verschoben wird, um einen internen Ausgleich in dem Druckgasversorgungssystem (34) durchzuführen.

10. Steuergerät (43) für ein Fahrzeug, das dazu eingerichtet ist, ein Verfahren nach einem der vorhergehenden Ansprüche auszuführen.

## Claims

1. Method for operating and/or refuelling a pressurized-gas supply system (34) with at least two pressurized-gas tanks (15, 16, 17, 18, 19) which are connected to an internal combustion engine or to an anode path (2) of a fuel cell system (1), **characterized in that** valve devices (21, 22, 23, 24, 25) which are assigned to the pressure tanks (15, 16, 17, 18, 19) and comprise, for each of the pressurized-gas tanks (15, 16, 17, 18, 19), a filling path (65) with an actively switchable filling valve (66) and a relief path (70) with an actively switchable relief valve (72) are individually controlled via a control device (43) which is sensorially connected to a sensor device (60) and comprises at least one sensor which detects a current temperature in the respective valve device (21, 22, 23, 24, 25).

2. Method according to Claim 1, **characterized in that** the control device (43) is equipped with a data set product which contains fluid reference data and/or limit data, with the aid of which the valve devices (21, 22, 23, 24, 25) are actuated, depending on the detected current temperatures in the valve devices (21, 22, 23, 24, 25), during a refuelling process and/or during operation of the pressurized-gas supply system (34) such that similarly detected pressurized-gas tank temperatures in the pressurized-gas tanks (15,16,17,18,19) are kept below a first limit temperature.

3. Method according to Claim 2, **characterized in that** the control device (43) is equipped with a data set product which contains fluid reference data and/or limit data, with the aid of which the valve devices (21, 22, 23, 24, 25) are actuated, depending on the detected current temperatures in the valve devices (21, 22, 23, 24, 25), during a refuelling process and/or during operation of the pressurized-gas supply system (34) such that an increase in an individual pressurized-gas tank temperature in one of the pressurized-gas tanks (15,16, 17, 18, 19) is limited by means of the actuation of the respective valve device (21, 22, 23, 24, 25) as soon as a second limit temperature is reached in the affected pressurized-gas tank (15, 16, 17, 18, 19).

4. Method according to Claim 2 or 3, **characterized in that** the filling path (65) of a pressurized-gas tank (15, 16, 171, 181, 19), the detected pressurized-gas tank temperature of which is below the first limit value, is released via the filling valve (66) in the respective valve device (21, 22, 23, 24, 25) in order to meet a specified safety requirement.

5. Method according to any of Claims 2 to 4, **characterized in that** at least one relief path (70) of a pressurized-gas tank (15, 16, 17, 18, 19) is released via the relief valve (72) in the respective valve device (21, 22, 23, 24, 25) in order to dissipate heat, which has been introduced into the respective pressurized-gas tank (15, 16, 17 ,18, 19) from the outside, in a targeted manner from the pressurized-gas tank (15, 16, 17, 18, 19).

6. Method according to any of the preceding claims, **characterized in that** the filling paths (65) and/or the relief paths (70) of the valve devices (21, 22, 23, 24, 25) are actuated via the control device (43) in a targeted manner in order to regulate the pressurized-gas tank temperatures in the pressurized-gas tanks (15, 16, 17, 18, 19) over time.

7. Method according to any of the preceding claims, **characterized in that** the pressurized-gas tanks (15, 16, 17, 18, 19) are refuelled in a cascaded manner via a check valve (67) in the filling path (65) of the assigned valve device (21, 22, 23, 24, 25) after actuation of the filling valve (66) if the pressurized-gas tanks (15, 16, 17, 18, 19) have different tank internal pressures during refuelling.

8. Method according to any of the preceding claims, **characterized in that** pressurized-gas tanks (15, 16, 17, 18, 19) with different storage volumes are not refuelled simultaneously via the respectively assigned filling paths (65) but rather at different times, wherein filling paths (65) of pressurized-gas tanks (26, 27, 28) with a relatively large storage volume are released via the control device (43) before filling paths (65) of pressurized-gas tanks (29, 30) with a relatively small storage volume.

9. Method according to any of the preceding claims, **characterized in that** pressurized gas is shifted in a targeted manner between the pressurized-gas tanks (15, 16, 17, 18, 19) via the assigned valve devices (21, 22, 23, 24, 25) in order to carry out internal equalization in the pressurized-gas supply system (34).

10. Control device (43) for a vehicle, which is designed to carry out a method according to any of the preceding claims.

## Revendications

1. Procédé de fonctionnement et/ou de ravitaillement d'un système d'alimentation en gaz comprimé (34) avec au moins deux réservoirs de gaz comprimé (15, 16, 17, 18, 19), qui sont reliés à un moteur à combustion interne ou à un trajet d'anode (2) d'un système de pile à combustible (1), **caractérisé en ce que** des dispositifs de soupape (21, 22, 23, 24, 25) associés aux réservoirs de pression (15, 16, 17, 18, 19), qui comprennent pour chacun des réservoirs de gaz comprimé (15, 16, 17, 18, 19) un trajet de remplissage (65) avec une soupape de remplissage (66) pouvant être commutée activement et un trajet de décharge (70) avec une soupape de décharge (72) pouvant être commutée activement, sont pilotés individuellement par un appareil de commande (43), qui est relié selon une technique de détection à un système de détection (60), qui comprend au moins un capteur, qui détecte une température actuelle dans le dispositif de soupape (21, 22, 23, 24, 25) respectif.

2. Procédé selon la revendication 1, **caractérisé en ce que** l'appareil de commande (43) est équipé d'un produit de jeu de données, qui contient des données de référence fluidiques et/ou des données limites permettant de piloter les dispositifs de soupape (21, 22, 23, 24, 25) en fonction des températures actuelles détectées dans les dispositifs de soupape (21, 22, 23, 24, 25) lors d'une opération de ravitaillement et/ou lors du fonctionnement du système d'alimentation en gaz comprimé (34) de telle sorte que des températures de réservoir de gaz comprimé également détectées dans les réservoirs de gaz comprimé (15, 16, 17, 18, 19) sont maintenues en dessous d'une première température limite.

3. Procédé selon la revendication 2, **caractérisé en ce que** l'appareil de commande (43) est équipé d'un produit de jeu de données, qui contient des données de référence fluidiques et/ou des données limites permettant de piloter les dispositifs de soupape (21, 22, 23, 24, 25) en fonction des températures actuelles détectées dans les dispositifs de soupape (21, 22, 23, 24, 25) lors d'une opération de ravitaillement et/ou lors du fonctionnement du système d'alimentation en gaz comprimé (34) de telle manière qu'une augmentation d'une température individuelle du réservoir de gaz comprimé dans l'un des réservoirs de gaz comprimé (15, 16, 17, 18, 19) est limitée par le pilotage du dispositif de soupape (21, 22, 23, 24, 25) respectif dès qu'une deuxième température limite est atteinte dans le réservoir de gaz comprimé (15, 16, 17, 18, 19) concerné.

4. Procédé selon la revendication 2 ou 3 **caractérisé en ce que** le trajet de remplissage (65) d'un réservoir de gaz comprimé (15, 16, 171, 181, 19), dont la température du réservoir de gaz comprimé détectée est inférieure à la première valeur limite, est libéré par la soupape de remplissage (66) dans le dispositif de soupape (21, 22, 23, 24, 25) respectif pour satisfaire à une exigence de sécurité spécifiée.

5. Procédé selon l'une des revendications 2 à 4, **caractérisé en ce qu'**au moins un trajet de décharge (70) d'un réservoir de gaz comprimé (15, 16, 17, 18, 19) est libéré par la soupape de décharge (72) dans le dispositif de soupape (21, 22, 23, 24, 25) respectif pour évacuer hors du réservoir de gaz comprimé (15, 16, 17, 18, 19) de manière ciblée la chaleur introduite dans le réservoir de gaz comprimé (15, 16, 17,18,19) depuis l'extérieur.

6. Procédé selon l'une des revendications précédentes, **caractérisé en ce que** les trajets de remplissage (65) et/ou les trajets de décharge (70) des dispositifs de soupape (21, 22, 23, 24, 25) sont pilotés de manière ciblée par l'appareil de commande (43) pour régler dans le temps les températures de réservoir de gaz comprimé dans les réservoirs de gaz comprimé (15, 16, 17, 18, 19).

7. Procédé selon l'une des revendications précédentes, **caractérisé en ce que** les réservoirs de gaz comprimé (15, 16, 17, 18, 19) sont ravitaillés en cascade par une soupape antiretour (67) dans le trajet de remplissage (65) du dispositif de soupape (21, 22, 23, 24, 25) associé après un pilotage de la soupape de remplissage (66), lorsque les réservoirs de gaz comprimé (15, 16, 17, 18, 19) présentent des pressions intérieures de réservoir différentes lors du ravitaillement.

8. Procédé selon l'une des revendications précédentes, **caractérisé en ce que** les réservoirs de gaz comprimé (15, 16, 17, 18, 19) avec des volumes de stockage de taille différente ne sont pas ravitaillés simultanément, mais avec un décalage temporel par les trajets de remplissage (65) respectivement associés, des trajets de remplissage (65) de réservoirs de gaz comprimé (26, 27, 28) avec un volume de stockage plus important étant libérés par l'appareil de commande (43) dans le temps avant des trajets de remplissage (65) de réservoirs de gaz comprimé (29, 30) avec un volume de stockage inférieur.

9. Procédé selon l'une des revendications précédentes, **caractérisé en ce que** du gaz comprimé est déplacé de manière ciblée entre les réservoirs de gaz comprimé (15, 16, 17, 18, 19) par les dispositifs de soupape (21, 22, 23, 24, 25) associés pour effectuer une compensation interne dans le système d'alimentation en gaz comprimé (34).

10. Appareil de commande (43) pour un véhicule, qui est mis au point pour exécuter un procédé selon l'une des revendications précédentes.
